# EUROPEAN PATENT SPECIFICATION

(11) **EP 3 592 061 B1**
(45) Date of publication and mention of the grant of the patent: **10.11.2021**
(21) Application number: 17899018.0
(22) Date of filing: 02.03.2017
(51) Int. Cl.: H04W 72/04, H04W 72/12

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR ET PROCÉDÉ DE COMMUNICATION SANS FIL

(43) Date of publication of application: 08.01.2020
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN); JIANG, Huiling, Beijing 100190 (CN)
(74) Representative: Hoffmann Eitle
(86) International application number: PCT/JP2017/008374
(87) International publication number: WO 2018/158924

(56) References cited:
- JP-A- 2017 005 398
- US-A1- 2014 086 112
- US-A1- 2014 301 256
- US-A1- 2016 065 350

## Description

### Technical Field

The present invention relates to a terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th Generation mobile communication system)," "5G+ (plus)," "NR (New Radio)," "NX (New radio access)," "FX (Future generation radio access)," "LTE Rel. 13," "LTE Rel. 14," "LTE Rel. 15" or later versions) are under study.

In existing LTE systems (for example, LTE Rel. 8 to 13), downlink (DL) and/or uplink (UL) communication are performed using 1-ms subframes (also referred to as "transmission time intervals (TTIs)" and so on). These subframes are the time unit for transmitting 1 channel-encoded data packet, and serve as the unit of processing in, for example, scheduling, link adaptation, retransmission control (HARQ (Hybrid Automatic Repeat reQuest)) and so on.

A radio base station controls the allocation (scheduling) of data for a terminal, and reports the schedule of data to the terminal by using downlink control information (DCI). The terminal controls the receipt of DL data and/or the transmission of uplink data based on DCI. To be more specific, based on DCI, the terminal receives downlink data in the same subframe as where the DCI is present, or transmits uplink data in a subframe located a predetermined period later (for example, 4 ms later).

US 2014/0086112 A1 describes a method and apparatus for Time Division Duplex, TDD, operation in a wireless transmit/receive unit, WTRU. The method includes receiving a first TDD uplink/downlink,UL/DL, configuration for a serving cell, receiving a second TDD UL/DL configuration for the serving cell, receiving an indication of directions to use for subframes with conflicting directions between the first TDD UL/DL configuration and the second TDD UL/DL configuration, using the first TDD UL/DL configuration for timing of UL scheduling and UL HARQ, using the second TDD UL/DL configuration for timing of DL scheduling and DL HARQ, and determining a direction for each subframe with conflicting directions based on the received indication, wherein on a condition that the determined direction for a subframe with conflicting directions is DL, receiving in the subframe in the DL.

US 2016/0065350 A1 describes a terminal device that includes: a setting unit that sets resources used to calculate a channel quality indicator; a reception unit that monitors a physical downlink control channel accompanied with information indicating an uplink-downlink configuration; a measurement unit that performs interference measurement to calculate the channel quality indicator based on the resource excluding at least the resource in an uplink subframe which is based on the uplink-downlink configuration; and transmission unit that transmits the channel quality indicator via a physical uplink shared channel. The transmission unit adjusts transmission with the physical uplink shared channel to which a physical downlink control channel accompanied with an uplink grant corresponds in subframe n+k based on detection of the physical downlink control channel accompanied with the uplink grant in subframe n. The setting unit sets a second uplink-downlink configuration. Here, k is given based on the second uplink-downlink configuration.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Future radio communication systems (including, for example, 5G, NR and so forth, which will be hereinafter collectively referred to as "NR") are expected to realize various radio communication services so as to fulfill varying requirements (for example, ultra-high speed, large capacity, ultra-low latency, etc.).

For example, NR is under study to provide radio communication services referred to as "eMBB (enhanced Mobile Broad Band)," "mMTC (massive Machine Type Communication)," "URLLC (Ultra Reliable and Low Latency Communications)," and so on.

Now, envisaging NR, studies are in progress to control the scheduling of data (UL data and/or DL data) in the same slot and/or different slots by using DCI that is transmitted in certain transmission time intervals (for example, slots).

In this case, given that one or more symbols are provided in a slot, the situation might take place where the direction of communication reported in 1 signaling (for example, higher layer signaling) and the direction of communication reported in another signaling (for example, physical layer signaling) conflict with each other (do not match, in other words).

However, how the UE works when a situation like this, in which communicating directions (transmission directions) conflict with each other, takes place, is not decided yet. Moreover, it is preferable that communicating directions do not conflict with each other in the first place. Unless the direction of communication are prevented from conflicting with each other, there may be a decline in communication throughput, a decline in received quality and/or the like.

The present invention has been made in view of the above, and it is therefore an object of the present invention to provide a terminal and a radio communication method that can prevent communicating directions from conflicting with each other.

### Solution to Problem

According to one aspect of the present invention, there is provided a terminal as set out in Claim 1.

According to another aspect of the present invention, there is provided a radio communication method as set out in Claim 5.

### Advantageous Effects of Invention

According to the present invention, it is possible to prevent communicating directions from conflicting with each other.

### Brief Description of Drawings

FIG. 1 is a diagram to show an example in which communicating directions conflict with each other when multi-slot scheduling is used;
FIGs. 2A to 2C are diagrams to show examples of the first embodiment of the present invention;
FIG. 3 is a diagram to show an example in which the communicating direction of non-critical symbols is identified by physical layer signaling received last;
FIGs. 4A and 4B are diagrams to show examples of retransmitting collision slot data;
FIG. 5 is a diagram to show an exemplary schematic structure of a radio communication system according to a first background example useful for understanding the present invention;
FIG. 6 is a diagram to show an exemplary overall structure of a radio base station according to a second background example useful for understanding the present invention;
FIG. 7 is a diagram to show an exemplary functional structure of a radio base station according to the second background example;
FIG. 8 is a diagram to show an exemplary overall structure of a terminal according to one embodiment of the present invention;
FIG. 9 is a diagram to show an exemplary functional structure of a terminal according to one embodiment of the present invention; and
FIG. 10 is a diagram to show an exemplary hardware structure of a radio base station according to the second background example and a terminal according to one embodiment of the present invention.

### Description of Background Examples and Embodiments

Described herein is a terminal that has a receiving section that receives downlink control information to schedule transmission and/or receipt of data in a predetermined slot, and a control section that judges the direction of communication in the predetermined slot and controls transmission and/or receipt.

Envisaging NR, studies are underway to introduce multiple numerologies rather than a single numerology. Here, a numerology may refer to a set of communication parameters that characterize the design of signals in a given RAT (Radio Access Technology), the design of a RAT and so on.

For example, a numerology may include parameters that are defined with respect to the frequency direction and/or the time direction, such as subcarrier spacing (SCS), the length of symbols, the length of cyclic prefixes, the length of subframes, the length of transmission time intervals (TTIs) and so on. For example, envisaging NR, multiple SCS intervals such as 15 kHz, 30 kHz, 60 kHz, 120 kHz, 240 kHz and so forth may be supported.

Also, envisaging NR, with the support for multiple neurologies and so forth, research is underway to introduce time units (referred to as, for example, "subframes," "slots," "minislots," "subslots," "TTIs," "short TTIs," "radio frames," etc.) that are the same in and/or different than existing LTE systems (for example, LTE Rel. 8 to 13).

Note that a TTI may represent the unit of time for use for transmitting/receiving transport blocks, code blocks and/or codewords of data to be transmitted/received. Assuming that a TTI is provided, the period of time (for example, the number of symbols) where the transport block, the code blocks and/or the codewords of data are actually mapped may be shorter than the TTI.

For example, when a TTI is formed with a predetermined number of symbols (for example, 14 symbols), the transport block, the code blocks and/or the codewords of transmitting/receiving data can be transmitted and received in one or a predetermined number of symbol periods among these. If the number of symbols in which the transport block, the code blocks and/or the codewords of transmitting/receiving data are transmitted/received is smaller than the number of symbols constituting the TTI, reference signals, control signals and so on can be mapped to symbols in the TTI where no data is mapped.

Subframes may serve as units of time that have a predetermined time duration (for example, 1 ms), irrespective of which numerology is used by (and/or configured in) the terminal (for example, UE (User Equipment)).

On the other hand, slots may serve as time units that are based on the numerology used by the UE. For example, if the subcarrier spacing is 15 kHz or 30 kHz, the number of symbols per slot may be 7 or 14. If the subcarrier spacing is 60 kHz or greater, the number of symbols per slot may be 14. In addition, a slot may contain a plurality of minislots (subslots).

Generally, subcarrier spacing and symbol duration hold a reciprocal relationship. Therefore, as long as the number of symbols per slot (or minislot (subslot)) stays the same, the higher (wider) the subcarrier spacing, the shorter length of a slot, and the lower (narrower) the subcarrier spacing, the longer the length of a slot. Note that "subcarrier spacing is high" may be paraphrased as "subcarrier spacing is wide," and "subcarrier spacing is low" may be paraphrased as "subcarrier spacing is narrow."

Now, in existing LTE systems, a base station (which may be referred to as, for example, "BS," "eNB," etc.) transmits downlink control information (DCI) to UE by using a downlink control channel (for example, PDCCH (Physical Downlink Control CHannel), enhanced PDCCH (EPDCCH), etc.). The phrase "transmit (receive) downlink control information" may be interpreted as meaning "transmitting (receiving) downlink control channel."

The DCI may be, for example, scheduling information to include at least one of resources (time and/or frequency resources) for scheduled data, transport block information, data modulation scheme information, delivery acknowledgment information (also referred to as, for example, "retransmission control information," "HARQ-ACK," "ACK/NACK," and so forth), information related to demodulation reference signals and the like.

DCI that schedules receipt of DL data and/or measurement of DL reference signals may be referred to as a "DL assignment (or a DL grant)." DCI that schedules transmission of UL data and/or transmission of UL sounding (measurement) signals may be referred to as a "UL grant."

Envisaging NR, frequency division duplex (FDD) operation in paired spectra and time division duplex (TDD) operation in unpaired spectra are under study. For example, study is conducted on controlling the direction for communicating signals (transmission direction) to change in predetermined time resources (for example, slots, symbols and the like) in one or more spectra for FDD operation and/or TDD operation. The direction of communication may be referred to as "DL/UL communicating direction," "transmission direction" and so on.

The base station (which may be also referred to as "BS," "gNB," etc.) may report (configure) information about the direction of communication assigned to the UE (used by the UE), to the UE. If a data field is included in a predetermined time interval, the UE may judge whether to transmit or receive a signal in the data field based on the information about the direction of communication.

This information regarding the direction of communication may be reported (indicated) by way of dynamic physical layer signaling (for example, DCI), may be reported (configured) by semi-static and/or static higher layer signaling (for example, RRC (Radio Resource Control) signaling, broadcast information (master information block (MIB), system information blocks (SIBs), etc.), and MAC (medium access control) signaling), may be reported by using other signals, or may be reported by combining these.

Note that information about the direction of communication may be included in a UL grant and/or a DL assignment, or may be reported using different DCI.

For example, the base station may report information about the format of slots to the UE as information about the direction of communication. The slot format-related information may include information to identify which symbols in a predetermined slot are DL, UL or other (for example, blank, sidelink, etc).

The slot format-related information may be reported by using a group-common PDCCH for a predetermined UE group (a set of one or more UEs), or may be reported by using UE-specific PDCCHs directed to specific UEs.

In addition, for NR, 3 data scheduling methods that involve the use of DCI are currently under study. To be more specific, these methods are (1) self-slot scheduling, in which DCI commands the scheduling of data to be transmitted in the same slot, (2) cross-slot scheduling, in which DCI commands the scheduling of data to be transmitted in different slots, and (3) multi-slot scheduling (multi-slot aggregation), in which DCI commands the scheduling of data to be transmitted in a number of slots.

In the following description, when "data" is simply mentioned, this may be interpreted as meaning "DL data and/or UL data." Also, to "schedule data" may be interpreted as meaning "scheduling DL data (receipt of DL data) and/or scheduling UL data (transmission of UL data)." Also, to "schedule slots" may be interpreted as meaning "scheduling data in slots." Note that scheduling of data to be transmitted and/or received in slots may be referred to as "slot scheduling."

Note that cross-slot scheduling includes cross-single-slot scheduling, in which 1 slot is subject to scheduling, and cross-multi-slot scheduling, in which multiple slots are subject to scheduling. Hereinafter, in the present specification, for the sake of simplicity, "cross-slot scheduling" refers to cross-single-slot scheduling, and "multi-slot scheduling" refers to cross-multi-slot scheduling.

Also, DCI to command multi-slot scheduling may or may not include commands for scheduling the same slot where this DCI is contained. Also, multiple slots that are subject to multi-slot scheduling may be slots that are contiguous in time, or slots that are non-contiguous in time.

In this case, given that one or more symbols are provided in a slot, the situation might take place where the direction of communication reported in 1 signaling (for example, higher layer signaling) and the direction of communication reported in another signaling (for example, physical layer signaling) conflict with each other (do not match, in other words).

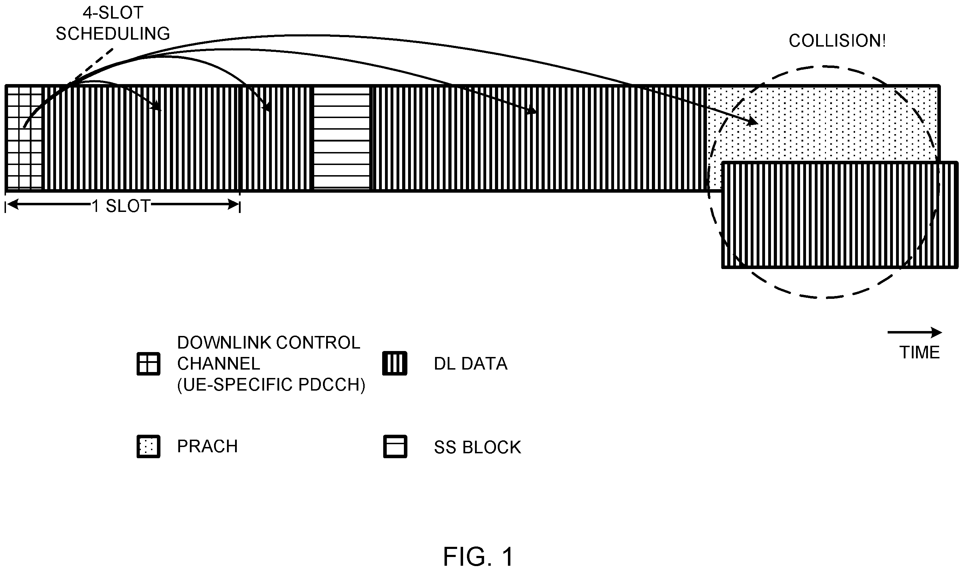

FIG. 1 is a diagram to show an example in which communicating directions conflict with each other when multi-slot scheduling is used. In this example, DCI that is transmitted in a predetermined slot (for example, slot #n) commands the UE to receive downlink data in multiple slots (here, 4 slots from slot #n to #n+3) (4-slot scheduling).

Note that, although the drawings to follow will show examples in which DCI is transmitted using UE-specific PDCCHs, this is by no means limiting. DCI may be transmitted in, for example, a group-common PDCCH, EPDCCH and/or other control channels. Also, the slots in these drawings will be shown and described as slots #n, #n+1, #n+2, and #n+3, in order from the left, but these slot numbers are by no means limiting.

Also, with the herein-contained examples, slot #n+1 contains the synchronization signal (SS) block, slot #n+3 contains resources in which the random access channel (PRACH (Physical Random Access CHannel)) can be transmitted.

The assumption here is that the resources for the SS block and the PRACH are configured by higher layer signaling, but this is by no means limiting. When resources are configured to serve as an SS block, this is equivalent to the case where DL is reported as the direction of communication. Also, when resources are configured so that the PRACH can be transmitted, this is equivalent to the case where UL is reported as the direction of communication.

The SS block refers to resources including at least one of a PSS (Primary Synchronization Signal), an SSS (Secondary Synchronization Signal), and a broadcast channel (for example, a PBCH (Physical Broadcast CHannel)), or a combination of these. The PSS, the SSS and the PBCH may be understood interchangeably as meaning the PSS for NR (NR-PSS), the SSS for NR (NR-SSS) and the PBCH for NR (NR-PBCH), respectively.

The SS block of FIG. 1 may be a set of one or more SS blocks (SS burst). Also, the location (resource) of the SS block, the location of the PDCCH and the like are by no means limited to the fields shown in FIG. 1.

The DL data of slot #n+1 is communicated in the same direction as that of the signal transmitted in the SS block (DL), and therefore can be transmitted without problems by applying rate matching by taking into account the resources used for the SS block. On the other hand, the DL data of slot #n+3 is communicated in a different direction (DL) from the direction in which the signal is transmitted in the PRACH (UL), and therefore causes interference when transmitted in resources overlapping with the PRACH.

However, how the UE works when a situation like this, in which communicating directions conflict with each other, takes place, is not decided yet. Moreover, it is preferable that communicating directions do not conflict with each other in the first place. Unless the direction of communication are prevented from conflicting with each other, there may be a decline in communication throughput, a decline in received quality and/or the like.

So, the present inventors have worked on a method of preventing communicating directions from conflicting with each other, and arrived at the present invention. Now, embodiments of the present invention and background examples useful for understanding the present invention will be described below in detail with reference to the accompanying drawings. Note that the radio communication methods according to each embodiment may be applied individually or may be applied in combination.

Note that the following embodiments will show cases in which data scheduling is controlled on a per slot basis, but other time units (for example, subframes, minislots, subslots, transmission time intervals (TTIs), short TTIs, radio frames, etc.) are equally applicable.

### (Radio Communication Method)

### <First Embodiment>

In the first embodiment of the present invention, UE assumes that the communicating directions of symbols do not conflict with each other in a predetermined slot. If, for a predetermined symbol of a predetermined slot, multiple pieces of information to be communicated in conflicting directions are reported to the UE, the UE may process the transmission or receipt of the symbol based on one piece of information, or may ignore at least one piece of information.

Here, the above predetermined slot can be any slot, or may be a slot in which an essential signal is transmitted (or can be transmitted). The essential signal is, for example, a signal for an essential operation such as cell search and random access, and may be, for example, at least one of PRACH, PBCH, and SS (PSS/SSS/other SS).

Information about this essential signal may be reported (and/or configured) by higher layer signaling (for example, RRC signaling, broadcast information, etc.), physical layer signaling (for example, DCI), or a combination of these. In this case, based on the information about the essential signal reported from the base station, the UE may assume that there is no collision of communicating directions in the slot in which the essential signal is transmitted.

For example, if the essential signal is a DL signal, and, furthermore, this essential signal is configured to be transmitted in a predetermined slot, the UE may assume that DCI to schedule UL data transmission in this predetermined slot is not transmitted (not received). For example, if the essential signal is a DL signal, and, furthermore, this essential signal is configured to be transmitted in a predetermined slot, the UE may assume that DCI to schedule UL data transmission in this predetermined slot is not transmitted (not received).

The base station preferably performs scheduling so that communicating directions do not conflict with each other in the same symbol in a predetermined slot. Also, even in the slot where the above-mentioned essential signal is transmitted, data that is communicated in a direction that does not to collide with that of the essential signal (that is, data to be communicated in the same direction) may be scheduled.

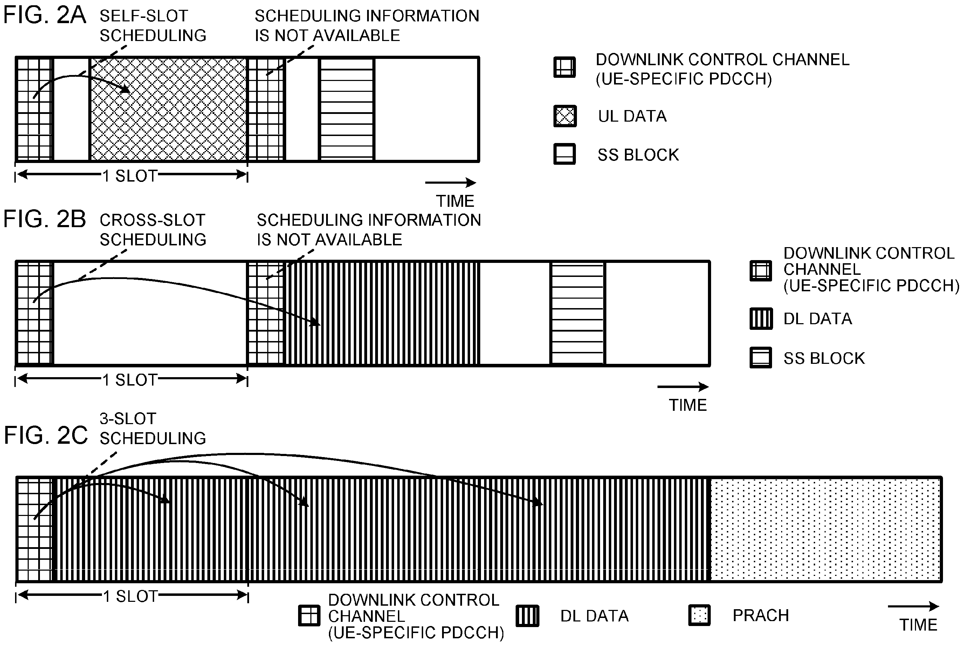

FIGs. 2A to 2C are diagrams to show examples of the first embodiment of the present invention. FIGs. 2A to 2C show examples in which self-slot scheduling, cross-slot scheduling, and multi-slot scheduling are performed.

Referring to FIG. 2A, in slot #n, the UE transmits UL data, bead on DCI that is received, in the same slot. Meanwhile, slot #n+1 is a slot for transmitting an SS block. The base station may generate DCI to transmit in slot #n+1 so as not to include information for performing self-slot scheduling of data. If the UE knows in advance that slot #n+1 is a slot for transmitting an SS block, the UE may assume that DCI to contain information for performing self-slot scheduling of this slot is not transmitted (or is ignored).

In FIG. 2B, based on DCI received in a predetermined slot (slot #n), the UE receives DL data in another slot (slot #n+1). Meanwhile, slot #n+2 is a slot for transmitting an SS block. The base station may generate DCI to transmit in slot #n+1 (and #n) so as not to include information for performing cross-slot scheduling of the data of slot #n+2. If the UE knows in advance that slot #n+2 is a slot for transmitting an SS block, the UE may assume that DCI to contain information for performing cross-slot scheduling of this slot is not transmitted (or is ignored).

In FIG. 2C, based on DCI received in a predetermined slot (slot #n), the UE receives DL data in a number of slots (slot #n, #n+1 and #n+2). Meanwhile, slot #n+3 is a slot for transmitting the PRACH. The base station may generate DCI (DCI to command slot scheduling for slots #n, #n+1 and #n+2) to transmit in slot #n so as not to include information for performing multi-slot scheduling of the data of slot #n+3. If the UE knows in advance that slot #n+3 is a slot for transmitting the PRACH, the UE may assume that DCI to contain information for performing multi-slot scheduling of this slot is not transmitted (or is ignored).

As described above, according to the first embodiment, collisions of communicating directions can be easily reduced by placing limitations on scheduling. The first embodiment is particularly suitable for use in self-slot scheduling and cross-slot scheduling.

### <Second Embodiment>

In a second embodiment of the present invention, UE assumes that there is no collision of communicating directions with respect to the same symbol, in a predetermined slot. To be more specific, in the second embodiment, control is exerted so that the direction of communication does not change (or is prioritized) in one or more symbols in a slot.

For example, a predetermined symbol in a slot may be reserved for an essential signal (for example, at least one of PRACH, PBCH and SS). This symbol may be referred to as a "critical symbol." Information about the critical symbol is reported to (and/or configured in) UE by higher layer signaling (for example, RRC signaling, broadcast information, etc.), physical layer signaling (for example, DCI), or a combination of these.

The information about the critical symbol may contain one or more symbol indices corresponding to the critical symbol, and information to identify an essential signal that is not allowed to be overridden. Based on separately reported and/or defined resource information, the UE may identify symbols in the identified essential signal that are not allowed to be overridden.

The information about the critical symbol may include information as to in which direction the critical symbol is communicated. In this case, the UE may determine the communicating direction of the critical symbol based on the information about the critical symbol's communicating direction, and control transmission and/or receipt so that this communicating direction does not change.

The UE may assume that the communicating direction of the critical symbol is not overridden by signaling (for example, physical layer signaling) that is received last (later). In other words, once the communicating direction of a critical symbol is set up by, for example, higher layer signaling, the UE may assume that this communicating direction cannot be changed later unless higher layer signaling is changed again.

Note that the UE may assume that, in a slot containing no critical symbol, the communicating direction of a non-critical symbol (which may be also referred to as "non-essential symbol," and the like) is changed (overridden) by signaling that is received last (for example, physical layer signaling).

Also, in a slot to contain a critical symbol, the direction in which a non-critical symbol is communicated may be indicated by signaling that is received last (for example, physical layer signaling), or may be assumed to be the same communicating direction as that of the critical symbol (that is, the communicating direction of the non-critical symbol is not overridden (changed) by signaling that is received last (for example, physical layer signaling)). In the former case, data in the critical symbol and/or a symbol near the critical symbol may be subjected to rate matching, or may be punctured.

Overriding the communicating direction is possible by using specific signaling (for example, signaling other than physical layer signaling), and may not be possible using another specific signaling (for example, physical layer signaling).

Also, information as to whether overriding of the communicating direction is possible or not (enabled or disabled) may be reported to the UE. For example, information as to whether overriding of the communicating direction of non-critical symbols is possible or not may be reported to the UE. In this case, if the UE judges, based on this information, that overriding of the communicating direction of non-critical symbols is enabled, the communicating direction of non-critical symbols may be overridden by signaling that is received last (for example, physical layer signaling). In this case, if the UE judges, based on this information, that overriding of the communicating direction of non-critical symbols is disabled, the communicating direction of non-critical symbols may be overridden by signaling that is received last (for example, physical layer signaling).

Note that whether overriding of the communication direction is possible or not (enabled or disabled) may be judged based on the type of signaling that indicates the communicating direction. For example, for slots and/or symbols where the communicating direction is specified by UE-specific RRC signaling, overriding based on indication by physical layer signaling (for example, DCI) may be enabled, and, for slots and/or symbols where the communicating direction is specified by UE-common RRC signaling (for example, system information), overriding based on indication by physical layer signaling (for example, DCI) may be disabled.

Whether or not overriding based on indication by physical layer signaling (for example, DCI) is enabled or disabled for slots and/or symbols where the direction of communication is specified by signaling of predetermined types (for example, UE-specific RRC signaling, UE-common RRC signaling, etc.) may be configured by higher layer signaling (for example, RRC signaling) or the like.

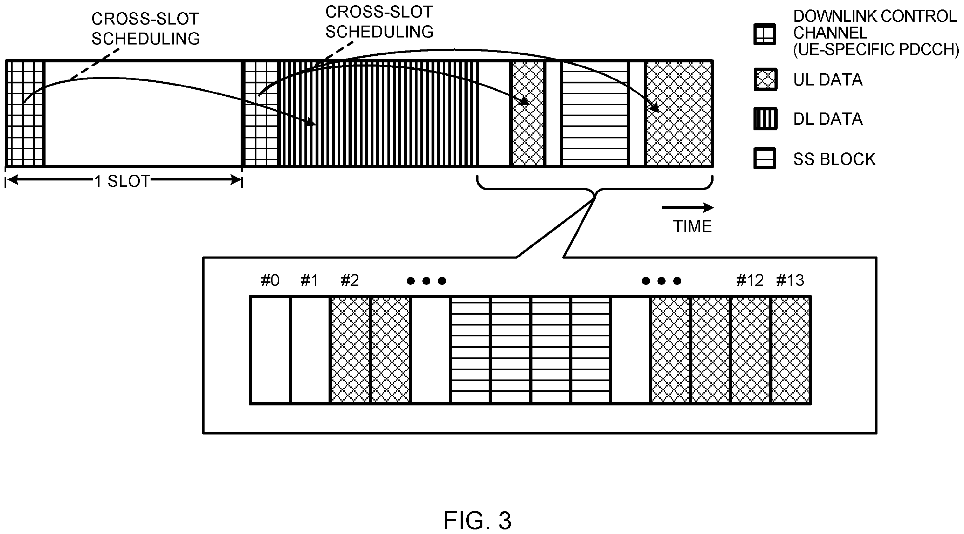

FIG. 3 is a diagram to show an example in which the communicating direction of non-critical symbols is indicated by physical layer signaling that is received last. In this example, the SS block is configured as a critical symbol, and the SS block is transmitted in #5 to #8 in slot #n+2. Also, UL data transmission in another slot (slot #n+2) are scheduled in cross-slot scheduling by DCI transmitted in a predetermined slot (slot #n+1).

In this example, the UE judges the communicating direction of the non-critical symbol in slot #n+2 based on the DCI received in slot #n+1. The UE may transmit UL data in symbols other than the symbols corresponding to the SS block. In this example, the UE transmits UL data in #2, #3 and #10 to #13 in slot #n+2. As shown in FIG. 3, control may be exerted so that no data is transmitted in symbols adjacent to the critical symbol.

### [Handling of data transmitted in collision slots]

A slot in which critical symbols are communicated in conflicting directions (or scheduled to conflict with each other) may be referred to as a "collision slot" or the like.

UE and/or the base station may operate on the assumption that the data of a collision slot has not been successfully received. For example, if DL data is present in a collision slot, the UE may (1) transmit a NACK in response to the data, assuming that the whole scheduled data (transport block) has failed to be received properly, or (2) transmit a NACK in response to part of the data, assuming that part of the scheduled data (for example, one or more code blocks) has failed to be received properly. At this time, the UE may not demodulate/decode (skip) all or part of the DL data in the collision slot, so that, in this case, battery consumption can be reduced.

For example, if UL data is present in a collision slot, the base station may (1) reschedule (for example, retransmit) the data, assuming that the whole scheduled data (transport block) has failed to be received properly, or (2) reschedule (for example, retransmit) part of the data, assuming that part of the scheduled data (for example, one or more code blocks) has failed to be received properly. At this time, the base station may not demodulate/decode (skip) all or part of the UL data in the collision slot, so that, in this case, battery consumption can be reduced.

The UE and/or the base station may retransmit the data of a collision slot after the collision slot is finished (for example, in the slot immediately after the collision slot, in a slot that is a number of slots after collision slot, and so forth). In this case, the UE and/or the base station may retransmit the data without receiving an HARQ-ACK in response to this collision slot's data. As to which data is retransmitted, all of the data that is scheduled (transport block) may be retransmitted, or only part of the data (for example, one or more code blocks) may be retransmitted.

Note that the resources to map part or all of the retransmitting data may be resources that are located in the same relative resource locations (for example, time and/or frequency resource locations) in slots as the resources where this part or all of the data is mapped in the collision slot, or may be different resources.

The timing for transmitting HARQ-ACK in response to the data of a collision slot as feedback may be the same (that is, normal feedback timing) as when there is no collision, or may be delayed by taking into account the above retransmission. For example, when the DL data of a collision slot is retransmitted after the collision slot is finished, the UE may determine the timing of transmitting an HARQ-ACK in response to the DL data as feedback based on the retransmitting slot, not the collision slot.

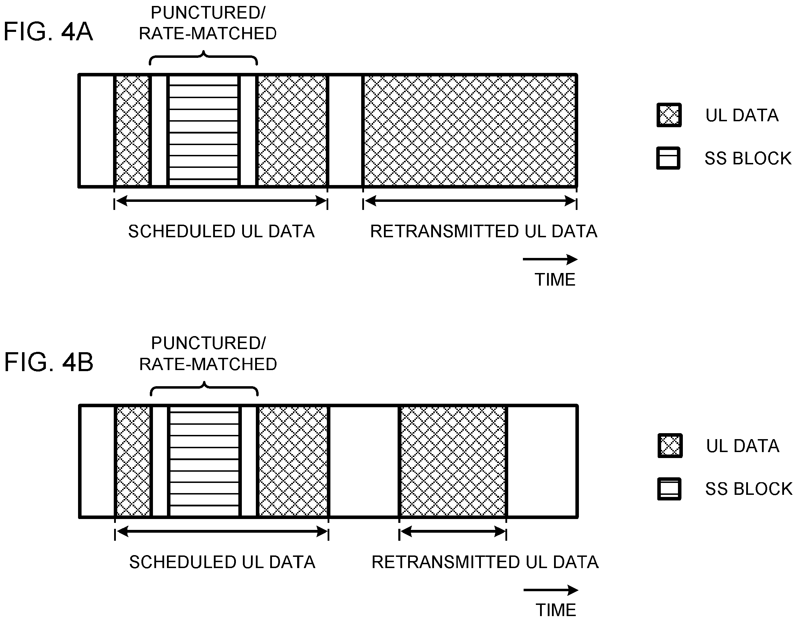

FIGs. 4A and 4B are diagrams to show examples of retransmitting collision slot data. In FIGs. 4A and 4B, slot #0 is a collision slot, and this corresponds to the same case as slot #2 of FIG. 3. The UE punctures or applies rate matching to data near critical symbols in the collision slot, in the scheduled UL data.

The UE may retransmit all the data that is scheduled in the slot immediately after the collision slot (slot #n+1) (FIG. 4A), or may retransmit part of the scheduled data (data corresponding to punctured or rate-matched resources) (FIG. 4B).

According to the second embodiment described above, it is possible to determine, in symbol units, what control should be exerted when communicating directions conflict with each other, so that collisions between communicating directions can be reduced without placing limitations on scheduling. The second embodiment is particularly suitable for use in multi-slot scheduling.

### (Variations)

Each embodiment described above may be used in combination. For example, when DCI that is received commands specific scheduling (for example, self-slot scheduling and/or cross-slot scheduling), the UE may perform processing based on the first embodiment in the slot scheduled by the DCI (for example, the UE may assume that there is no collision of communicating directions).

For example, when DCI that is received commands different scheduling (for example, multi-slot scheduling) from the above-described specific scheduling, the UE may perform processing based on the second embodiment in the slot scheduled by the DCI (for example, the UE may judge whether overriding of communication directions is enabled or disabled). Note that information about the association between methods of scheduling and methods reducing collisions of communicating directions (for example, the first and second embodiments described above) may be configured by, for example, higher layer signaling.

In this way, a configuration is adopted here in which whether or not to control the change of the direction of communication is judged depending on what scheduling DCI commands, so that a tradeoff can be made between the flexibility of scheduling and the overhead of communication that is required for this control.

### (Radio Communication System)

Now, the structure of the radio communication system according to a first background example useful for understanding the present invention will be described below. In this radio communication system, communication is performed using one or a combination of the radio communication methods according to the herein-contained embodiments of the present invention.

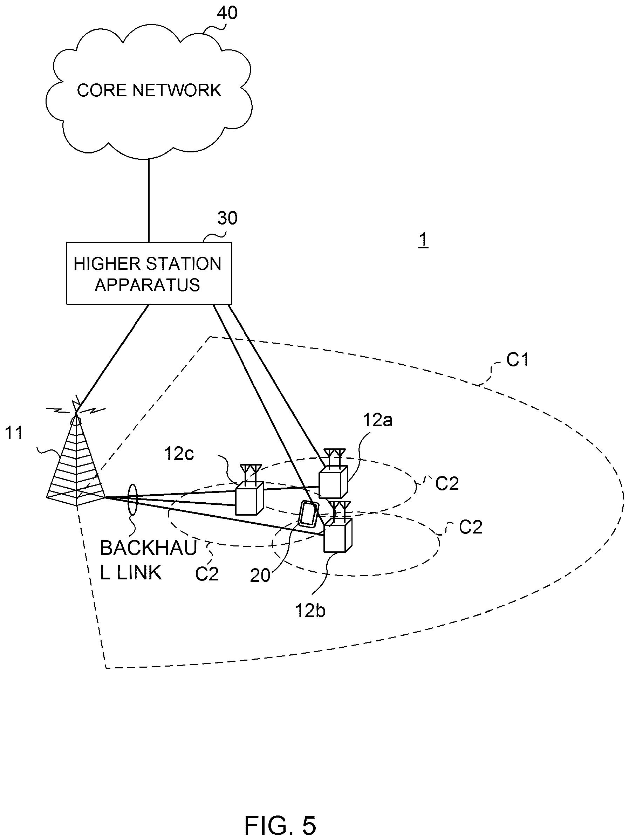

FIG. 5 is a diagram to show an example of a schematic structure of a radio communication system according to the first background example. A radio communication system 1 can adopt carrier aggregation (CA) and/or dual connectivity (DC) to group a plurality of fundamental frequency blocks (component carriers) into 1, where the LTE system bandwidth (for example, 20 MHz) constitutes 1 unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be seen as a system to implement these.

The radio communication system 1 includes a radio base station 11 that forms a macro cell C1, with a relatively wide coverage, and radio base stations 12a to 12c that are placed within the macro cell C1 and that form small cells C2, which are narrower than the macro cell C1. Also, terminals 20 are placed in the macro cell C1 and in each small cell C2. The arrangement, number and so on of cells and terminals are not limited to those illustrated in the drawings.

The terminals 20 can connect with both the radio base station 11 and the radio base stations 12. The terminals 20 may use the macro cell C1 and the small cells C2 at the same time by means of CA or DC. Furthermore, the terminals 20 may apply CA or DC using a number of cells (CCs) (for example, 5 or fewer CCs or 6 or more CCs).

Between the terminals 20 and the radio base station 11, communication can be carried out using a carrier of a relatively low frequency bandwidth (for example, 2 GHz) and a narrow bandwidth (referred to as, for example, an "existing carrier," a "legacy carrier" and so on). Meanwhile, between the terminals 20 and the radio base stations 12, a carrier of a relatively high frequency bandwidth (for example, 3.5 GHz, 5 GHz and so on) and a wide bandwidth may be used, or the same carrier as that used in the radio base station 11 may be used. Note that the structure of the frequency bandwidth for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between 2 radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with 1 or contiguous resource blocks per terminal, and allowing a plurality of terminals to use mutually different bands. Note that the uplink and downlink radio access schemes are not limited to these combinations, and other radio access schemes may be used.

In the radio communication system 1, a downlink shared channel (PDSCH (Physical Downlink Shared CHannel)), which is used by each terminal 20 on a shared basis, a broadcast channel (PBCH (Physical Broadcast CHannel)), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and/or PUSCH scheduling information, is communicated by the PDCCH.

Note that scheduling information may be reported via DCI. For example, the DCI for scheduling DL data reception may be referred to as "DL Assignment," and the DCI to schedule UL data transmission may be referred to as "UL grant."

The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACKs," "ACK/NACKs," etc.) in response to the PUSCH is transmitted by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, in the PUCCH, downlink radio quality information (CQI (Channel Quality Indicator)), delivery acknowledgment information, scheduling requests (SRs) and so on are communicated. By means of the PRACH, random access preambles for establishing connections with cells are communicated.

In the radio communication systems 1, the cell-specific reference signal (CRS (Cell-specific Reference Signal)), the channel state information reference signal (CSI-RS (Channel State Information-Reference Signal)), the demodulation reference signal (DMRS (DeModulation Reference Signal)), the positioning reference signal (PRS (Positioning Reference Signal)) and so on are communicated as downlink reference signals. Also, in the radio communication system 1, the measurement reference signal (SRS (Sounding Reference Signal)), the demodulation reference signal (DMRS) and so on are communicated as uplink reference signals. Note that the DMRS may be referred to as a "terminal-specific reference signal (UE-specific Reference Signal)." Also, the reference signals to be communicated are by no means limited to these.

### (Radio Base Station)

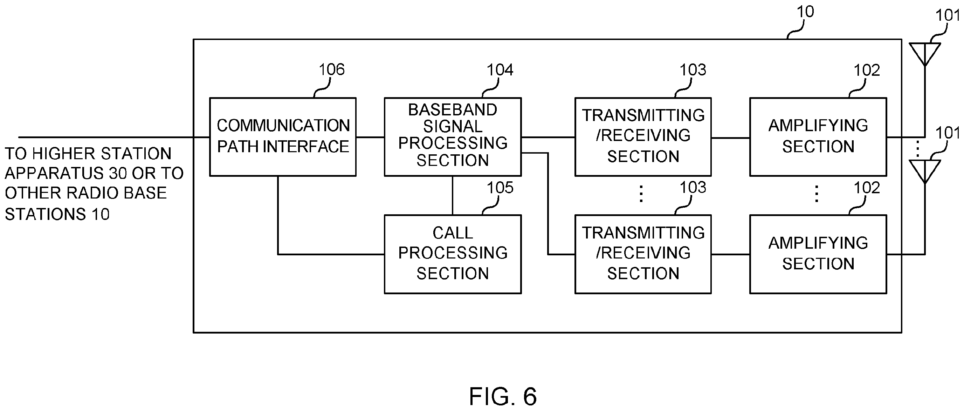

FIG. 6 is a diagram to show an exemplary overall structure of a radio base station according to a second background example useful for understanding the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

The transmitting/receiving sections 103 transmit, to the terminal 20, downlink control information (DCI, including, for example, UL grant, DL assignment etc.) that schedules the transmission and/or receipt of data in a predetermined slot. The transmitting/receiving section 103 may transmit DL data and may receive UL data.

Also, the transmitting/receiving section 103 may transmit, to the terminal 20, at least one of information about the direction of communication (for example, information about the slot format), information about essential signals, information about critical symbols, and information as to whether overriding of the direction of communication is possible or not (enabled or disabled).

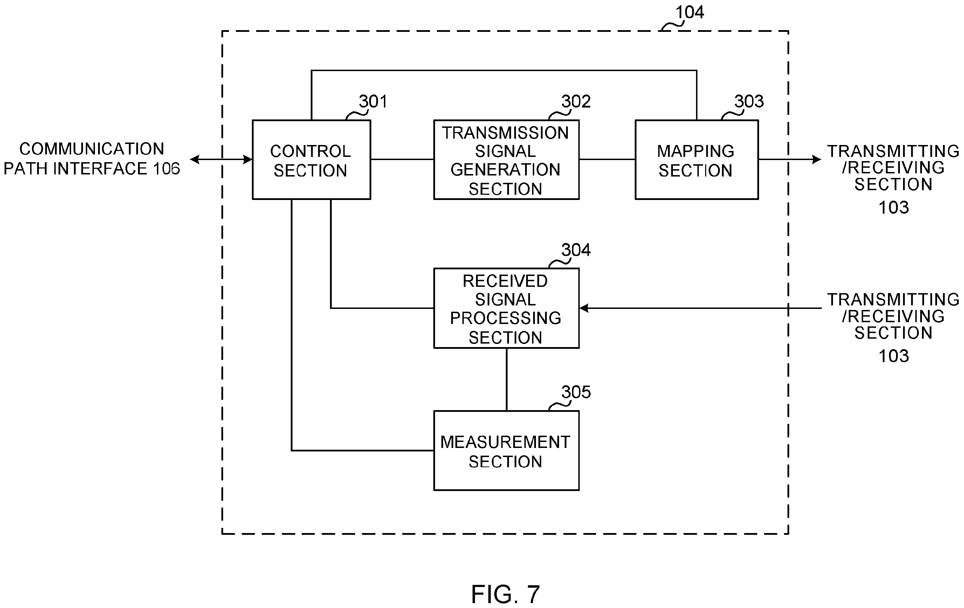

FIG. 7 is a diagram to show an exemplary functional structure of a radio base station according to the second background example. Note that, although this example primarily shows functional blocks that pertain to characteristic parts of the present background example, the radio base station 10 has other functional blocks that are necessary for radio communication as well.

The baseband signal processing section 104 at least has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH) and downlink control signals (for example, signals communicated in the PDSCH and/or the EPDCCH). The control section 301 controls the generation of downlink control signals, downlink data signals and so on, based on the results of deciding whether or not retransmission control is necessary for uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DMRS, etc.) and so on.

In addition, the control section 301 may control the scheduling of uplink data signals (for example, signals transmitted in the PUSCH), uplink control signals (for example, signals transmitted in the PUCCH and/or the PUSCH, such as acknowledgment information), random access preambles (for example, signal transmitted by the PRACH), uplink reference signals and so on.

The control section 301 exerts control so that, for the terminal 20, transmission and/or receipt of data are scheduled in a predetermined slot. Also, the control section 301 exerts control so that downlink control information (for example, DCI) to command scheduling is transmitted.

For example, the control section 301 may perform scheduling so that there is no collision of communicating directions in the above predetermined slot. The control section 301 may exert control so that information that prohibits (restricts) overriding of the direction of communication by DCI is transmitted for a predetermined symbol in the predetermined slot.

The control section 301 may apply puncturing or rate matching to the data corresponding to the above predetermined symbol and/or a symbol near the predetermined symbol.

The control section 301 may exert control so that, when communicating directions conflict with each other in the above predetermined slot, delivery acknowledgement information (for example, HARQ-ACK) in response to part or all of the data in the predetermined slot is transmitted.

The control section 301 may exert control so that, when communicating directions conflict with each other in the above predetermined slot, part or all of the data in the predetermined slot is retransmitted (transmitted) in a slot following the above predetermined slot (for example, in the slot following immediately afterwards, the slot following multiple slots afterwards, and so forth).

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink data allocation information, and/or UL grants, which report uplink data allocation information, based on commands from the control section 301. DL assignments and UL grants are both DCI, and follow the DCI format. Also, the downlink data signals are subjected to the coding process, the modulation process and so on, by using coding rates and modulation schemes that are determined based on, for example, channel state information (CSI) from each terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the terminals 20 (uplink control signals, uplink data signals, uplink reference signals and so on). For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), etc.), the signal strength (for example, RSSI (Received Signal Strength Indicator)), transmission path information (for example, CSI), and so on. The measurement results may be output to the control section 301.

### (Terminal)

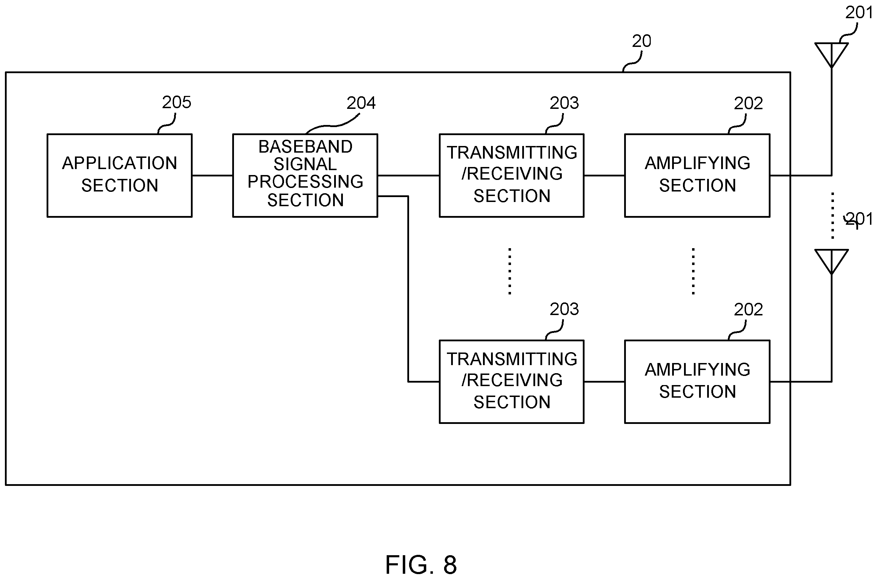

FIG. 8 is a diagram to show an exemplary overall structure of a terminal according to one embodiment of the present invention. A terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

The transmitting/receiving sections 203 receive downlink control information (DCI, including, for example, UL grant, DL assignment, etc.) that schedules the transmission and/or receipt of data in a predetermined slot. The transmitting/receiving section 203 may receive DL data and may transmit UL data.

Also, the transmitting/receiving section 203 may receive, from the radio base station 10, at least one of information about the direction of communication (for example, information about the slot format), information about essential signals, information about critical symbols, and information as to whether overriding of the direction of communication is possible or not (enabled or disabled).

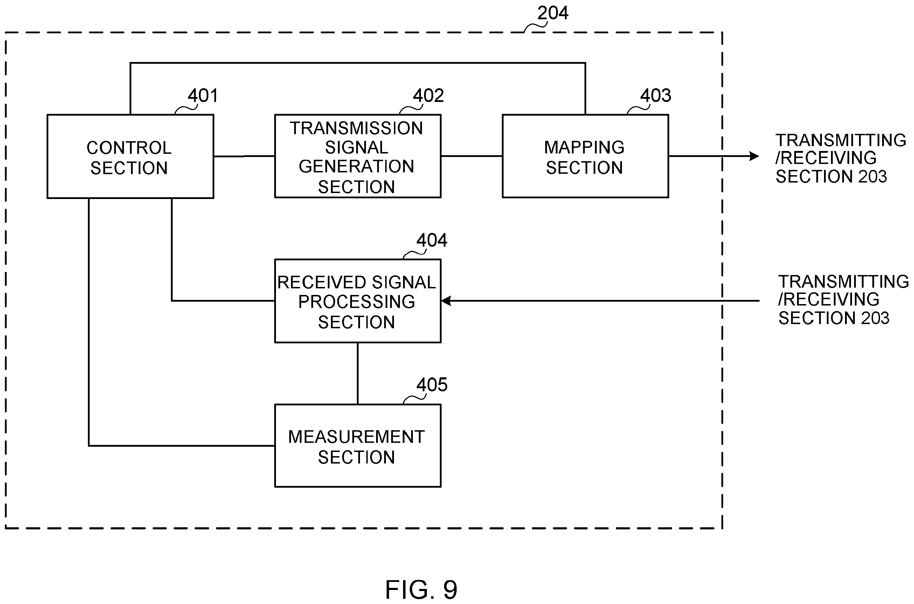

FIG. 9 is a diagram to show an exemplary functional structure of a terminal according to one embodiment of the present invention. Note that, although this example primarily shows functional blocks that pertain to characteristic parts of the present embodiment, the terminal 20 has other functional blocks that are necessary for radio communication as well.

The baseband signal processing section 204 provided in the terminal 20 at least has a control section 401, a transmission signal generation section 402, a mapping section 403, a received signal processing section 404 and a measurement section 405. Note that these configurations have only to be included in the terminal 20, and some or all of these configurations may not be included in the baseband signal processing section 204.

The control section 401 controls the whole of the terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405, and so on.

The control section 401 acquires the downlink control signals and downlink data signals transmitted from the radio base station 10, via the received signal processing section 404. The control section 401 controls the generation of uplink control signals and/or uplink data signals based on the results of deciding whether or not retransmission control is necessary for the downlink control signals and/or downlink data signals, and so on.

When the control section 401 acquires downlink control information (for example, DCI) that schedules the transmission and/or receipt of data in a predetermined slot from the received signal processing section 404, the control section 404 may judge the direction of communication in the predetermined slot (based on the communicating direction that is judged with respect to this predetermined slot), and control transmission and/or receipt. Here, "the direction of communication in a predetermined slot" may be interpreted as meaning that "the direction in which time resources (for example, one or more symbols) included in a predetermined slot are communicated."

For example, the control section 401 may assume that there is no collision of communicating directions in the above predetermined slot. The control section 401 may assume that the direction of communication is not overridden by DCI in the predetermined symbol of the predetermined slot.

The control section 401 may apply puncturing or rate matching to data corresponding to the above predetermined symbol and/or a symbol near the predetermined symbol.

The control section 401 may exert control so that, when communicating directions conflict with each other in the above predetermined slot, delivery acknowledge information (for example, HARQ-ACK) in response to part or all of the data in the predetermined slot is transmitted.

The control section 401 may exert control so that, when communicating directions conflict with each other in the above predetermined slot, part or all of the data of the above predetermined slot is retransmitted (transmitted) in a slot following the predetermined slot (for example, in the slot following immediately afterwards, the slot following multiple slots afterwards, and so forth).

Furthermore, when various kinds of information reported from the radio base station 10 are acquired via the received signal processing section 404, the control section 401 may update the parameters to use in control based on these pieces of information.

The transmission signal generation section 402 generates uplink signals (uplink control signals, uplink data signals, uplink reference signals and so on) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

For example, the measurement section 405 may perform RRM measurements, CSI measurements and so on based on the received signals. The measurement section 405 may measure the received power (for example, RSRP), the received quality (for example, RSRQ, SINR, etc.), the signal strength (for example, RSSI), transmission path information (for example, CSI), and so on. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

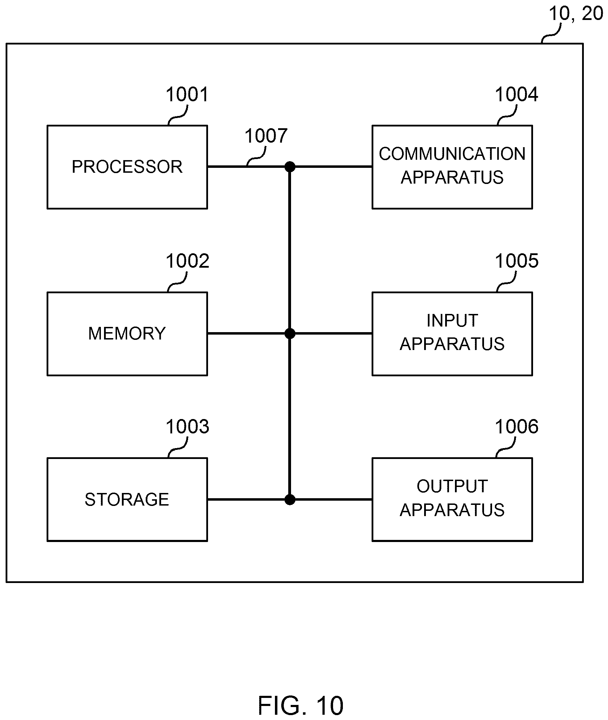

For example, the radio base station according to the second background example, terminals according to embodiments of the present invention may function as a computer that executes the processes of the radio communication method of the present invention. FIG. 10 is a diagram to show an exemplary hardware structure of a radio base station according to a background example useful for understanding the present invention and a terminal according to one embodiment of the present invention. Physically, the above-described radio base stations 10 and terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

Each function of the radio base station 10 and the terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "carrier," a "carrier frequency, " a "site," a "beam," and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. A subframe may be a fixed time duration (for example, 1 ms) not dependent on the numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a plurality of mini-slots. Each mini-slot may consist of one or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each terminal) to allocate to each terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that when a TTI is given, the time interval (for example, the number of symbols) in which transport blocks, code blocks and/or codewords are actually mapped may be shorter than the TTI.

Note that, when 1 slot or 1 mini-slot is referred to as a "TTI," one or more TTIs (that is, one or more slots or one or more mini-slots) may be the minimum time unit of scheduling. Also, the number of slots (the number of mini-slots) to constitute this minimum time unit of scheduling may be controlled.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," "a partial TTI" (or a "fractional TTI"), a "shortened subframe," a "short subframe," a "mini-slot," "a sub-slot" and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 mini-slot, 1 subframe or 1 TTI in length. 1 TTI and 1 subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be comprised of one or more resource elements (REs). For example, 1 RE may be a radio resource field of 1 subcarrier and 1 symbol.

Note that the structures of radio frames, subframes, slots, mini-slots, symbols and so on described above are merely examples. For example, configurations pertaining to the number of subframes included in a radio frame, the number of slots included in a subframe, the number of mini-slots included in a slot, the number of symbols and RBs included in a slot or a mini-slot, the number of subcarriers included in an RB, the number of symbols in a TTI, the symbol duration, the length of cyclic prefixes (CPs) and so on can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overridden, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (LI control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by 1 bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as terminals. For example, each aspect/embodiment of the present invention may be applied to a configuration in which communication between a radio base station and a terminal is replaced with communication among a plurality of terminals (D2D (Device-to-Device)). In this case, terminals 20 may have the functions of the radio base stations 10 described above. In addition, terms such as "uplink" and "downlink" may be interpreted as "side." For example, an uplink channel may be interpreted as a side channel.

Likewise, the terminals in this specification may be interpreted as radio base stations. In this case, the radio base stations 10 may have the functions of the terminals 20 described above.

Certain actions which have been described in this specification to be performed by base stations may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiment illustrated in this specification may be used individually or in combinations, which may be switched depending on the mode of implementation, as long as they fall within the scope of at least one of the appended claims. The order of processes, sequences, flowcharts and so on that have been used to describe the examples/embodiments herein may be re-ordered as long as inconsistencies do not arise and the re-ordered processes, sequences, flowcharts and so on fall within the scope of at least one of the appended claims. For example, although various methods have been illustrated in this specification with various components of steps in exemplary orders, the specific orders that are illustrated herein are by no means limiting to the scope of the invention, which is defined by the appended claims.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination of these. For example, "connection" may be interpreted as "access." As used herein, 2 elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

## Claims

1. A terminal (20) comprising:
a receiving section (203) configured to receive downlink control information including information on a transmission direction in a given slot, the information on a transmission direction in a given slot including information about a format of the given slot;
a control section (401) configured to control transmission and/or reception in the transmission direction in the given slot, so that the transmission direction in one or more given symbols in the given slot is not changed by the downlink control information.

2. The terminal (20) according to claim 1, wherein the given symbol is PRACH, or at least one of PBCH and SS.

3. The terminal (20) according to claim 2, wherein in receiving the PBCH and SS, the control section (401) is configured to control reception, so that the transmission direction is not changed by the downlink control information.

4. The terminal (20) according to claim 2, wherein in transmitting the PRACH, the control section (401) is configured to control transmission, so that the transmission direction is not changed by the downlink control information.

5. A radio communication method for a terminal (20), the method comprising:
receiving, by the terminal, downlink control information including information on a transmission direction in a given slot, the information on a transmission direction in a given slot including information about a format of the given slot;
controlling, by the terminal, transmission and/or reception in the transmission direction in the given slot, so that the transmission direction in one or more given symbols in the given slot is not changed by the downlink control information.

6. The radio communication method according to claim 5, wherein the given symbol is PRACH, or at least one of PBCH and SS.

## Patentansprüche

1. Endgerät (20), umfassend:
einen Empfangsabschnitt (203), der konfiguriert ist zum Empfangen von Downlink-Steuerinformationen einschließlich Informationen über eine Übertragungsrichtung in einem gegebenen Schlitz, wobei die Informationen über eine Übertragungsrichtung in einem gegebenen Schlitz Informationen über ein Format des gegebenen Schlitzes einschließen;
einen Steuerabschnitt (401), der konfiguriert ist zur Übertragung und/oder zum Empfang in der Übertragungsrichtung in dem gegebenen Schlitz zu steuern, so dass die Übertragungsrichtung in einem oder mehreren gegebenen Symbolen in dem gegebenen Schlitz nicht durch die Downlink-Steuerinformationen geändert wird.

2. Endgerät (20) nach Anspruch 1, wobei das gegebene Symbol PRACH oder mindestens eines von PBCH und SS ist.

3. Endgerät (20) nach Anspruch 2, wobei beim Empfangen von PBCH und SS der Steuerabschnitt (401) konfiguriert ist, um den Empfang zu steuern, so dass die Übertragungsrichtung durch die Downlink-Steuerinformationen nicht geändert wird.

4. Endgerät (20) nach Anspruch 2, wobei der Steuerabschnitt (401) beim Übertragen von PRACH konfiguriert ist, um die Übertragung zu steuern, so dass die Übertragungsrichtung durch die Downlink-Steuerinformationen nicht geändert wird.

5. Funkkommunikationsverfahren für ein Endgerät (20), das Verfahren umfassend:
Empfangen, durch das Endgerät, von Downlink-Steuerinformationen einschließlich Informationen über eine Übertragungsrichtung in einem gegebenen Schlitz, wobei die Informationen über eine Übertragungsrichtung in einem gegebenen Schlitz Informationen über ein Format des gegebenen Schlitzes einschließen;
Steuern, durch das Endgerät, der Übertragung und/oder des Empfangs in der Übertragungsrichtung in dem gegebenen Schlitz, so dass die Übertragungsrichtung in einem oder mehreren gegebenen Symbolen in dem gegebenen Schlitz nicht durch die Downlink-Steuerinformationen geändert wird.

6. Funkkommunikationsverfahren nach Anspruch 5, wobei das gegebene Symbol PRACH ist, oder mindestens eines von PBCH und SS.

## Revendications

1. Terminal (20) comprenant :
une section de réception (203) conçue pour recevoir des informations de commande de liaison descendante incluant des informations sur une direction de transmission dans un intervalle de temps donné, les informations sur une direction de transmission dans un intervalle de temps donné incluant des informations sur un format de l'intervalle de temps donné ;
une section de commande (401) conçue pour commander la transmission et/ou réception dans la direction de transmission dans l'intervalle de temps donné, de sorte que la direction de transmission dans un ou plusieurs symboles donnés dans l'intervalle de temps donné n'est pas modifiée par les informations de commande de liaison descendante.

2. Terminal (20) selon la revendication 1, dans lequel le symbole donné est PRACH, ou au moins un de PBCH et SS.

3. Terminal (20) selon la revendication 2, dans lequel lors de la réception des PBCH et SS, la section de commande (401) est conçue pour commander la réception, de sorte que la direction de transmission n'est pas modifiée par les informations de commande de liaison descendante.

4. Terminal (20) selon la revendication 2, dans lequel lors de la transmission du PRACH, la section de commande (401) est conçue pour commander la transmission, de sorte que la direction de transmission n'est pas modifiée par les informations de commande de liaison descendante.

5. Procédé de communication radio pour un terminal (20), le procédé comprenant :
la réception, par le terminal, d'informations de commande de liaison descendante incluant des informations sur une direction de transmission dans un intervalle de temps donné, les informations sur une direction de transmission dans un intervalle de temps donné incluant des informations sur un format de l'intervalle de temps donné ;
la commande, par le terminal, de la transmission et/ou réception dans la direction de transmission dans l'intervalle de temps donné, de sorte que la direction de transmission dans un ou plusieurs symboles donnés dans l'intervalle de temps donné n'est pas modifiée par les informations de commande de liaison descendante.

6. Procédé de communication radio selon la revendication 5, dans lequel le symbole donné est PRACH, ou au moins un de PBCH et SS.
